# EUROPEAN PATENT APPLICATION

(11) **EP 3 031 508 A2**
(43) Date of publication of application: **15.06.2016**
(21) Application number: 15460058.9
(22) Date of filing: 31.08.2015
(51) Int. Cl.: B01D 46/00, B01D 46/24

(54) **THE LOUVER REGENERATION SYSTEM FOR HORIZONTAL BAG FILTER**

(30) Priority: 08.12.2014 UA 2014013108
(71) Applicant: Svoboda Piotr Slebioda, 76-200 Slupsk (PL)
(72) Inventor: Slebioda, Piotr, 62-002 Suchy Las (PL)
(74) Representative: Luczak, Jerzy

(57) **Abstract**

The bag filter with the louvre regeneration system of horizontal filter bags relates to gas separators of solid particles in which bag filters are applied, made of an elastic material. The bag filter with the louvre regeneration system of the horizontal filter bags, comprises a housing divided by perforated wall on the cleaned gas chamber and a polluted gas chamber. In the polluted gas chamber are at least two rows of filter bags composed of at least two horizontal filter bags each, mounted on the perforated wall.

Wherein the filter has a louvre regeneration system of the filter bags, a compressed air tank, polluted gas inlet duct and cleaned gas outlet duct. The filter bag regeneration system is composed of electro-valves, caissons and compressed air ducts with nozzles and elements closing the caisson's aperture, connected with the electro-valves by compressed air pipes.

## Description

The claimed invention relates to separators for isolate particles, which casing is has at least one dirty air (gas) chamber and at least one cleaned air (gas) chamber in which are installed filter bags made of flexible material. In particulate the separator has a bag filter regeneration unit and can be used used in ferrous and non-ferrous metallurgy, chemical industry, construction industry and so on.

There are many different systems for cleaning polluted air (gas). Bag filters are used the most frequently to isolate the gas polluting particles. These filters are divided in two ranges: vertical and horizontal. Thus both types of bag filters operate on the same principle - polluted gas is sucked under pressure from the polluted gas chamber trough filter bags (preferably from an elastic material) to the cleaned gas chamber.

Filter bags during the process become covered by particles, and similar system of air (gas) cleaning has to be completed with filter bags regeneration systems.

For example, known air cleaning system US 5529592 which is composed of housing divided by a perforated wall on a polluted air chamber and a cleaned air chamber, a screw conveyor, a unit of the dust evacuation, polluted air inlet duct and the cleaned air outlet duct. By that in the polluted air chamber are installed filter bags in horizontal position connected to the perforated wall and inside the cleaned air chamber there is a moving chamber holes for the cleaned air passage with valves, divided also in two parts.

The moving chamber is situated in the cleaned air chamber in the manner that it adjoins snugly to the perforated wall. However, it has such size that two columns of the filter bags are between its walls.

In the upper part of the moving chamber is mounted at least one nozzle, connected to the compressed air tube, necessary do the filter bag regeneration.

The tube is connected through an electro-valve on the compressed air tank, which makes a part of the moving chamber.

The unit operates as follows. To the polluted gas chamber through the inlet duct is introduced polluted gas. It passes through the filter bag and passes through the openings in the moving chamber than it goes out by the outlet duct as cleaned gas.

The moving regeneration unit of filter bags moves along the rows of filter bags.

The pressure difference is constantly measured in the polluted gas chamber and in the cleaned gas chamber. When this difference differs from the set value, the moving chamber stops moving, the valves in the moving chamber are closing the holes and the compressed air is fed through the nozzles in order to clean filter bags..

In another embodiment of the filter separator the moving chamber has more nozzles, according to the number of filter bags.

In this embodiment the regeneration blow is more accurate (air aimed and directly sent into each filter bag of the column). However, both embodiments of the device also have disadvantages, primarily related to the process of regeneration of filter bags.

The apparatus of US patent 5529592 has a sophisticated system of pollution degree definition of filter bags (it requires a constant movement of the bag filter mobile regeneration unit). An important volume of compressed air is dispensed, during the injection of the compressed air an important volume of the injected air remain in the cleaned gas chamber.

Also known gas cleaning system FR 2218922, which consists of a housing divided by a perforated wall on a polluted gas chamber and a cleaned gas chamber, a polluted air inlet duct and a cleaned air outlet duct. By that in the polluted gas chamber are installed filter bags in horizontal position connected to the perforated wall and inside the cleaned gas chamber there is a system of the filter bag regeneration.

The system filter bag regeneration consist in a compressed air tank, electro-valves, compressed air ducts and caissons. The unit operates as follow. The unit operates as follows. To the polluted gas chamber through the inlet duct is introduced polluted gas. It passes through the filter bag and passes through the openings in the cleaned gas chamber than it goes out by the outlet duct as cleaned gas.

It is constantly measured pressure difference in the polluted gas chamber and cleaned gas chamber. When this difference is exceeding a given value, the compressed air is supplied from the compressed air tank, by the electro-valves, trough the compressed air ducts to caissons which are cleaning with this air the filter bags.

This unit also has disadvantages, primarily related to the process of regeneration of filter bag such as spent plenty of regenerative air - as compressed air injection it is directed not only on filter bags but also into the cleaned air chamber.

The closest system to the claimed one is gas cleaning system WO 209157642, which consists of a housing divided by a perforated wall on polluted gas chamber and cleaned gas chamber, equipped in polluted gas inlet duct and cleaned gas outlet duct. By that in the polluted gas chamber are installed filter bags in horizontal position connected to the perforated wall and inside the cleaned gas chamber there is a system of the filter bag regeneration.

The filter bag regeneration system consist in a compressed air tank, electro-valves, compressed air ducts, caissons and caissons closing elements. The unit operates as follows. The polluted gas is introduced, trough the polluted gas inlet duct, into the polluted gas chamber. It passes by the filter bags and by the openings in the caissons passes into the cleaned gas chamber than it is evacuated by the cleaned gas outlet duct.

It is constantly measured gas pressure difference in the polluted gas chamber and cleaned air chamber. When this difference is exceeding a given value, the caissons are closed by the closing elements and from the compressed air tank, trough the electro-valves and compressed air ducts comes the compressed air which clean up the filter bags.

In the first embodiment, the caisson closing elements are disposed in the middle, on its central axis. In the second embodiment, the closing elements are on one side of the caisson, in the third one, a pneumatic closing is applied, in the fourth, the caisson has an opening on one of its ends on which is installed the closing element.

All embodiments of this system reduce the amount of the compressed air used in the process however the caissons construction in every embodiment provide supplementary obstruction for the cleaned gas flow what gives extra charges for the extracting fan.

As the base of the invention is a task to create a bag filter for cleaning the air or gas with a modified construction of the filter bag regeneration unit so it leads to reduction of amount of the compressed air used in the process, and so it improves the quality of the process.

The problem is solved in the present invention by the horizontal bag filter, which consists of a housing divided by a perforated wall on a polluted gas chamber and a cleaned gas chamber, in which wall is set at least two rows of filter bags and at least two bags each, arranged horizontally according to perforated wall perforation, a compressed air tank, a polluted gas inlet duct and a cleaned gas outlet duct, a filter bag regeneration unit connected to the compressed air tank, the filter bags regeneration system is composed of electro-valves, caissons and compressed air ducts with nozzles and caisson closing elements, connected to electro-valves by compressed air pipes.

The defined task leads also to another embodiment of the present invention solved by compressed air inlet ducts, with nozzles, made in ellipsoid shape, where the size of the duct match the size of the aperture in the caisson.

In another embodiment of the present invention, to solve this problem, the regeneration system of the filter bags is composed of electro-valves, compressed air pipes, caissons and at least one element to close the aperture of the caisson, wherein each caisson has two longitudinal ducts with openings related to the openings in the perforated wall of the housing.

The invention is explained by the following drawings:

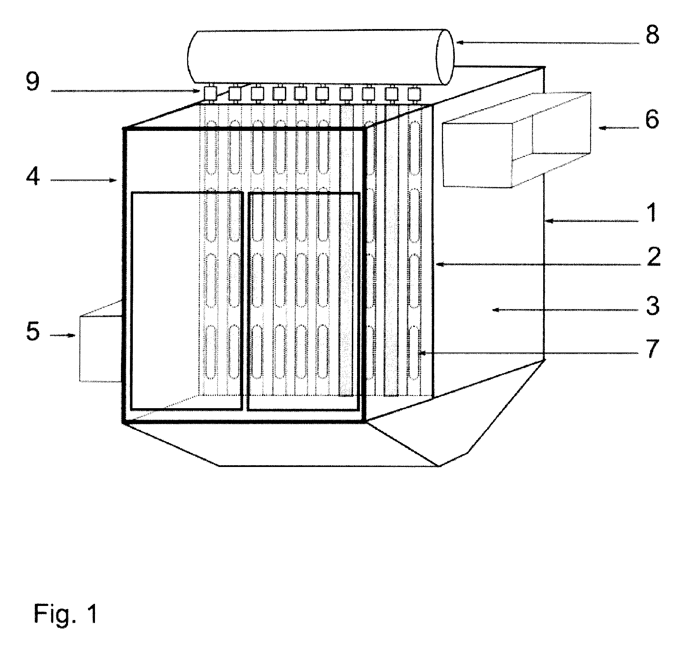

Figure 1 - general view horizontal bag filter.

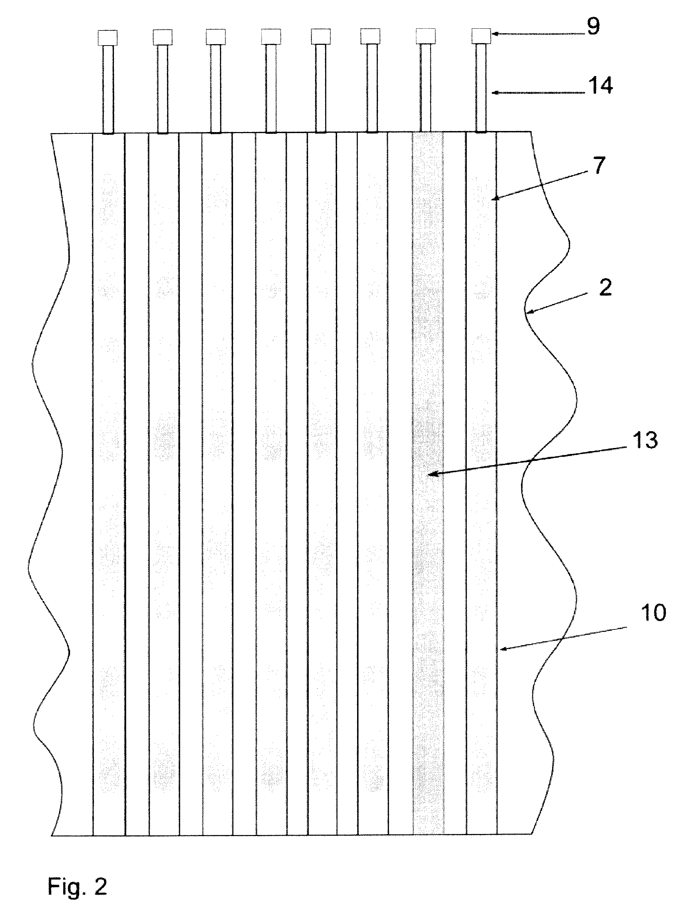

Figure 2 - general view of regeneration system taken from the cleaned gas chamber

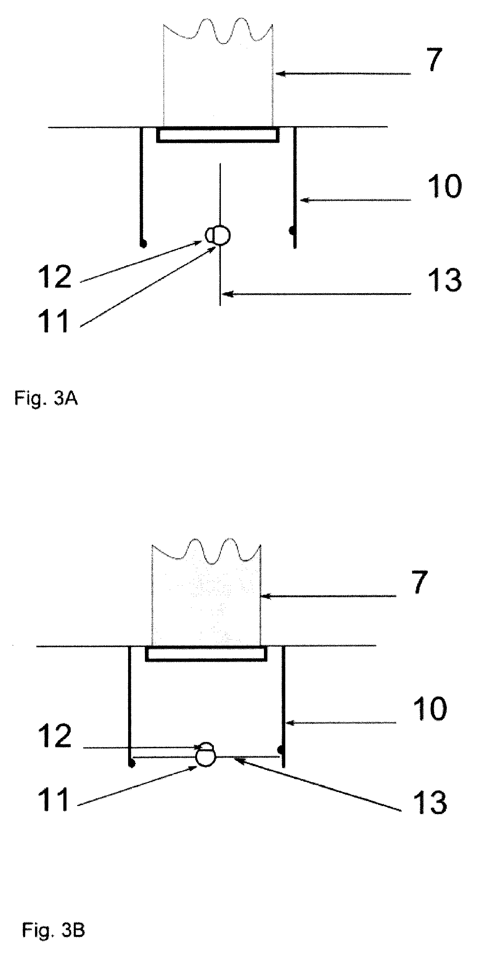

Figure 3 - Horizontal section first embodiment regeneration system at the point of the filter bag opening in the perforated wall.

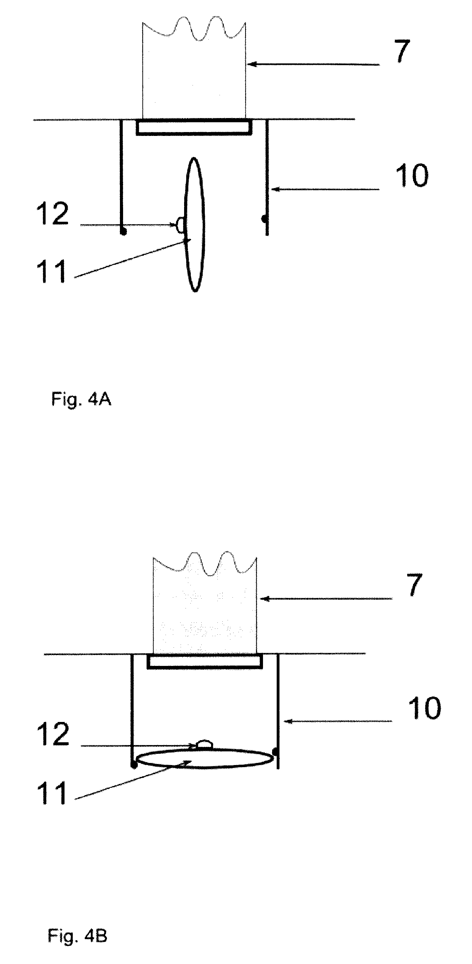

Figure 4 - Horizontal section second embodiment regeneration system at the point of the filter bag opening in the perforated wall.

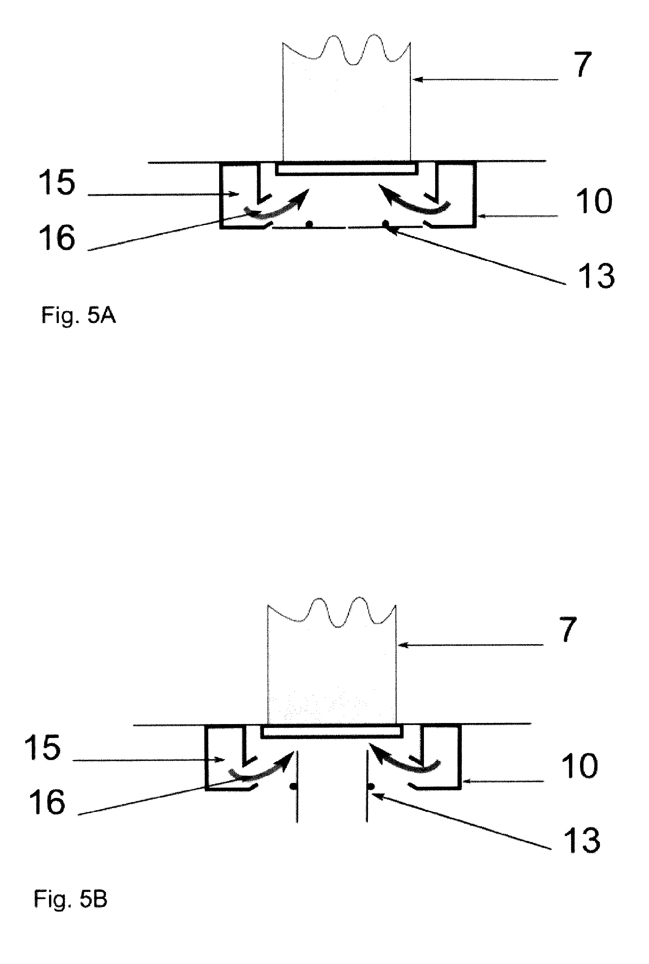

Figure 5 - Horizontal section of the third embodiment regeneration system at the point of the filter bag opening in the perforated wall.

The filter with a louvre regeneration system of horizontal filter bags, in its preferred embodiment, preferably comprises a housing 1, divided by a perforated wall 2, which separates within the housing 1 a polluted gas chamber 3 and cleaned gas chamber 4, a polluted gas inlet duct 5 and a cleaned gas outlet duct 6. Wherein in the polluted gas chamber are at least two rows of filter bags 7 not less than two horizontal filter bags by each row, mounted on the openings of the perforated wall. In the clean gas chamber 4 is installed a filter bag regeneration system connected to a compressed air tank 8 by electro-valves 9, making a part of the regeneration system.

Wherein the filter bag regeneration system is composed of caissons 10 and compressed air ducts 11 with nozzles 12 like also of caisson closing elements 13, connected with the electro-valves 9 and the compressed air pipes 14.

In the second embodiment of the proposed invention the compressed air ducts 11 with nozzles 12 serve as the caisson 10 aperture closing element, wherein the compressed air ducts 11 with the nozzles 12 have an ellipsoidal shape of the dimension fitting exactly the size of the aperture of the caisson 10.

In another embodiment the caisson 10 is used also as a compressed air duct and has at least one closing elements 13 for the caisson's aperture, wherein each caisson 10 has two longitudinal ducts 15 with openings 16 situated accordingly to the openings on the perforated wall 2 of the housing 1.

The horizontal bag filter with the louvre regeneration system, as claimed, works as follow. The polluted gas is taken in, under pressure, by the polluted gas inlet duct 5 into the polluted gas chamber 3. It goes through the filter bags 7, is cleaned than goes to the cleaned gas chamber 4, than is taken out through the cleaned gas outlet duct 6. During the cleaning process on the filter bags 7 the polluted gas loses solid particles (as the dust) which are agglomerated on the surface of the filter bags 7. As the process go on, the amount of the solid particles captured on the filter bag surface becomes critical and the filtration process slows down. It is measured by the difference between the pressure present in polluted gas chamber 3 and the cleaned gas chamber 4 (the pressure sensors not shown on the figures, placed inside the chambers). To continue effective flow gas during the filtration process on the filter bags 7 is necessary to regenerate those bags. To clean up the filter bags 7 is applied the louvre regeneration system which works as follow. The control unit (a remote part located outside the filter) receives an information that the pressure difference between the polluted gas chamber 3 and the cleaned gas chamber 4 is bigger than allowed, than the controller, following the program, orders to close the caissons openings with the caisson opening closing elements 13. Once the openings are closed, the compressed air is delivered from the compressed air tank, by the electro-valve 9, the compressed air pipe 14 and nozzles 12 placed on the compressed air duct 11, to the openings of the filter bags 7.

After that, the openings of the caissons open again and the filtration process continue on the regenerated filter bags.

In the second embodiment of the claimed invention the control unit, following the program, orders to close the caisson openings by the mean of the compressed air ducts 11. The rest of the process is the same like in the first embodiment.

In another embodiment of the claimed invention the control unit, following the program, orders to close the caisson openings by the mean of the caisson opening closing elements 13. Once the openings are closed, the electro-valve 9 opens and the compressed air coming from the compressed air tank 8, through the compressed air pipe 14, comes to the longitudinal ducts 15 and its openings 16 situated relatively to openings in the perforated wall 2 of the housing 1, the air is blown to the filter bags 7.

After that, the apertures of the caisson are open and the concerned filter bags participate in the filtration process again.

## Claims

1. The filter with a louvre regeneration system of horizontal filter bags, which is compose of a housing divided by a perforated wall, on the cleaned gas chamber and the polluted gas chamber in which one are installed at least two rows of filter bags not less than two horizontal filter bags by each row, mounted on the openings of the perforated wall, a filter bag regeneration system connected to a compressed air tank, the polluted gas inlet duct and the cleaned gas outlet duct, **characterized in that** the filter bag (7) regeneration system is composed of electro-valves (9), caissons (10) and compressed air ducts (11) with nozzles (12) like also of caisson closing elements (13), connected with the electro-valves (9) and the compressed air pipes (14).

2. The filter with the louvre regeneration system of horizontal filter bags following the point 1, **characterized in that** the compressed air duct (11) with nozzles (12) serves for to close the caisson aperture (10), wherein the compressed air duct (11) with nozzles (12) has an ellipsoidal shape and its size fits to the opening of the caisson (10).

3. The filter with the louvre regeneration system of horizontal filter bags following the point 1, **characterized in that** the caisson (10) serves as a compressed air duct and it has at least one closing element (13) of the caisson's (10) aperture, wherein each caisson (10) has two longitudinal ducts (15) with openings (16) situated accordingly to the openings on the perforated (2) wall of the housing (1).
